# EUROPEAN PATENT SPECIFICATION

(11) **EP 1 566 967 B1**
(45) Date of publication and mention of the grant of the patent: **19.12.2012**
(21) Application number: 05076096.6
(22) Date of filing: 30.03.2001
(51) Int. Cl.: H04N 7/173

(54) **Interactive media system and method for presenting content**
Interaktives Mediasystem und Methode zur Presentation von Berichten während Pausen
Systèmes médias interactifs et procédés permettant de représenter un contenu de temps de pause

(30) Priority: 31.03.2000 US 193894 P
(43) Date of publication of application: 24.08.2005
(62) Divisional of application: 01920893.3
(73) Proprietor: United Video Properties, Inc., Santa Clara, CA 95050 (US)
(72) Inventor: Deweese, Toby, Tulsa, OK 74137 (US); Thomas, William L., Bixby, OK 74008 (US); Berezowski, David M., Tulsa, OK 74133 (US); Ellis, Michael D., Boulder, CO 80304 (US); Moore, Sean S., Tulsa, OK 74104 (US)
(74) Representative: Bryn-Jacobsen, Caelia

(56) References cited:
- WO-A2-98/48566

## Description

This application claims the benefit of United States Provisional Application No. 60/193,894, filed March 31, 2000.

### Background of the Invention

This invention relates to an interactive media application and, more particularly, to an interactive media application that provides for pausing media.

Document WO 98/48566 shows the display of information during a pause.

Audio and video media, such as broadcast television programs, cable television programs, pay-per-view programs, video-on-demand (VOD) programs, near video-on-demand (NVOD) programs, music, promotional material, and other types of media are typically distributed to viewers over wired or wireless networks. Near video-on-demand and video-on-demand systems allow users to view media nearly on-demand or on-demand. Wired and wireless networks may include one-way cable or two-way cable television systems, broadcast television systems, satellite service networks such as digital broadcast satellite (DBS) systems, the Internet, or any other suitable means for delivering audio and video media.

Viewers and listeners of such media typically record the media on video cassettes, audio cassettes, compact disks, digital storage media, or the like. Recently, products have been developed that provide users with increased flexibility in managing what they watch and record. Personal video recorders such as the Philips™ HDR612 Tivo™ Personal TV Recorder and ReplayTV™ 3060 digital video recorder can record programs on a hard disk drive. Personal video recorder systems may provide users with video cassette functionality such as recording programs, scheduling recording of programs, allowing a user to watch one program while simultaneously recording another program, etc. In addition, personal video recorder systems may provide features that are not available with video cassette recorders such as the ability to pause real-time media (e.g., to answer the telephone or to answer the door) and then resume watching the media at the point where the media was initially paused. This provides the user with immediate control over watching real-time media. For example, there may be no need for the user to locate a blank video cassette to start recording the media that the user may miss.

Current personal video recorder systems such as Tivo™ based systems and ReplayTV™ systems display the last frame currently viewed by the viewer when the media is paused. For anyone viewing the media, the duration of time that the media is paused may be considered useless or uninformative.

Personal video recorder systems also allow users to fast-forward through commercial breaks when media is being played back. Some systems exist that are designed to play back recorded media without the commercial breaks for a viewer's convenience. Advertisers and the like who pay for time slots within the commercial breaks may prefer, however, to reach the viewers with their promotional material.

The invention is defined by claims 1 and 11.

### Brief Description of the Drawings

The above and other objects and advantages of the invention will be apparent upon consideration of the following detailed description, taken in conjunction with the accompanying drawings, in which like reference characters refer to like parts throughout, and in which:
FIG. 1 is a schematic diagram of an illustrative interactive media system in accordance with the present invention;
FIG. 2 shows an illustrative interactive media display screen in which pause-time content is being substituted for paused media in accordance with one embodiment of the present invention;
FIG. 3 shows an illustrative interactive media display screen in which the user has resumed playing media in accordance with one embodiment of the present invention;
FIG. 4 is a flowchart of illustrative steps involved with substituting pause-time content for real-time media in accordance with one embodiment of the present invention;
FIG. 5 is a flowchart of illustrative steps involved with substituting pause-time content for near video-on-demand media in accordance with one embodiment of the present invention;
FIG. 6 is a flowchart of illustrative steps involved with substituting pause-time content for recorded media or video-on-demand media in accordance with one embodiment of the present invention;
FIG. 7 is a flowchart of illustrative steps involved with preventing the user to access features in accordance with one embodiment of the present invention; and
FIG. 8 shows an illustrative screen that indicates that fast-forwarding is prohibited in accordance with one embodiment of the present invention.
FIG. 9 is a flowchart of illustrative steps involved with the media data instructing the interactive media application to store certain portions of the media in accordance with one embodiment of the present invention.

### Detailed Description of Preferred Embodiments

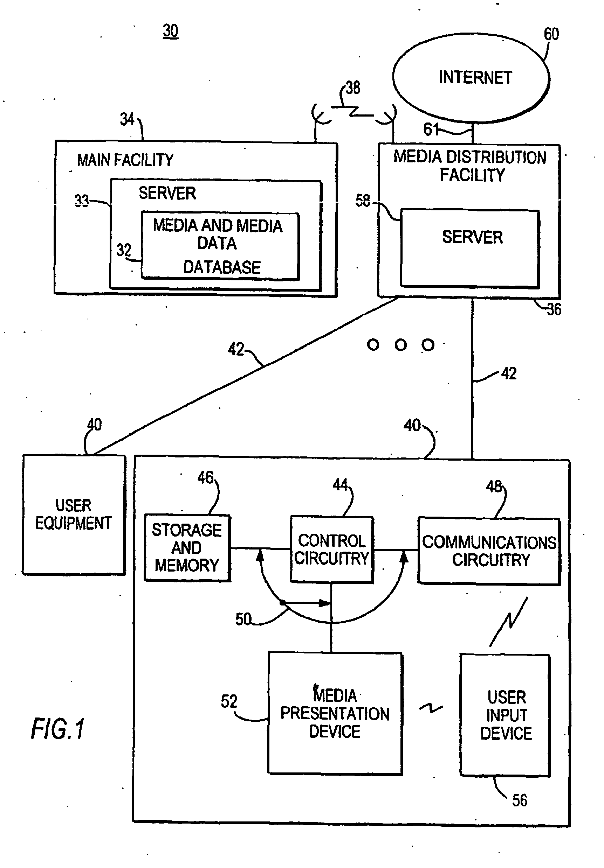

An illustrative interactive media system 30 in accordance with the present invention is shown in FIG. 1. Illustrative interactive media system 30 may include main facility 34, media distribution facility 36, and user equipment 40. Illustrative interactive media system 30 may include multiple main facilities, but only one main facility 34 is illustrated in FIG. 1 to avoid over complicating the drawing. For clarity the invention will be primarily discussed in connection with the use of one such main facility. Main facility 34 may include server 33 for storing and distributing media and media data from media and media data database 32, which may be used for storing media and media data. Main facility 34 may also store and distribute pause-time content, which may be media, media data, or both. Media may include audio and video media such as broadcast television programs, cable television programs, pay-per-view programs, video-on-demand (VOD) programs, near video-on-demand (NVOD) programs, music, promotional material, or any other suitable type of media. Media data may include data associated with the media such as metadata, identifiers, universal resource locators, interactive media application control information, program guide information (e.g., program guide listings data, pay-per-view ordering information, program promotional information, or any other suitable program guide information) or any other suitable data. Main facility 34 may distribute the media and media data to multiple media distribution facilities 36 via communications paths such as communications path 38. Communications path 38 may be any suitable communications path, such as a satellite link, a cable link, a fiber-optic link, a microwave link, a telephone network link, an Internet link, or a combination of such links. If it is desired to transmit video signals (e.g., television programs) over communications path 38 in addition to data signals, a relatively high bandwidth link such as a satellite link may be preferable to a relatively low bandwidth link such as a telephone line. Only one distribution facility 36 is illustrated in FIG. 1 to avoid over complicating the drawing. For clarity, the invention will be primarily discussed in connection with the use of one such distribution facility.

Media distribution facility 36 may be a broadcast television facility, a cable system headend, a satellite distribution facility, a broadcast music facility, or any other suitable media distribution facility for transmitting media, pause-time content, and any suitable information to user equipment 40. Media distribution facility 36 may include server 58. Server 58 may be capable of handling media such as text, images, graphics, audio, video, any other suitable media, or a combination of such media. Server 58 may include a database for storing media, media data, pause-time content or any other suitable content. In addition, server 58 may be capable of providing interactive services such as near video-on-demand (NVOD) and video-on-demand (VOD). Server 58 may be based on one or more computers.

Media data, which is associated with media, may include information such as metadata, identifiers, universal resource locators (URL's), interactive media application control information, or any other suitable information that may be associated with the media. For example, if the media is television, its associated media data may include information on the type of program that is being presented to the user such as comedy, movie, sports, etc., the URL to the program's Web site, or any other suitable information. Media distribution facility 36 may receive the media data from main facility 34 via communications path 38. If desired, some or all of the media data may be provided using data sources at facilities other than main facility 34. For example, media distribution facility 34 may receive the media data from Internet 60 via communications path 61, which may be a T1 link, a digital subscriber line (DSL) link, cable modem link, analog modem link, or any other suitable link.

Media data may be distributed along with its associated media using an in-band or out-of-band technique and may use digital or analog techniques. Media data may be distributed continuously, periodically, or on-demand to user equipment 40.

Media distribution facility 36 may distribute various audio and video media such as television programs, cable television programs, satellite programs, pay-per-view programs, VOD programs, NVOD programs, music programs, promotional material, or any other suitable type of media to user equipment 40 over communications paths 42. Media distribution facility may also distribute pause-time content, which may be any combination of text, graphics, audio, video, animations, trivia, promotions, advertisements, music, or any other suitable media content to user equipment 40.

Each media distribution facility 36 may have a number of associated users, each of which may have user equipment 40 coupled to media distribution facility 36 via one of communications paths 42. User equipment 40 may be equipment such as user television equipment, user computer equipment (e.g., a desktop computer, a laptop computer, a notebook computer, a handheld computing device such as a personal digital assistant or other small portable computer, etc.), user music equipment (e.g., a stereo) or any other suitable user media equipment for implementing the interactive media application. The interactive media application may be implemented locally on user equipment 40 or may be implemented using a client-server or distributed architecture where some of the application is implemented locally on user equipment 40 in the form of a client process and some of the application is implemented at a remote location (e.g., media distribution facility 36) as a server process.

User equipment 40 may include components such as control circuitry 44, memory and storage 46, communication circuitry 48, media presentation device 52, and user input device 56 for implementing the interactive media application. The components may be configured to support functions of the interactive media application such as receiving media, media data, and pause-time content, recording media in storage, simultaneously recording and playing media, playing recorded media from storage, and sending and receiving application data and information. Control circuitry 44 may communicate with and control storage and memory 46, communications circuitry 48, and media presentation device 52 using communications paths 50. Paths 50 may be hard wired, wireless (e.g., Bluetooth), optical paths or the like.

Storage and memory 46 may include a magnetic media recorder (e.g., hard disk drive or the like), memory (e.g. flash memory, EEPROM, or the like), a videocassette recorder, a digital recording device, any other suitable memory and storage device, or any suitable combination thereof. Some or all of memory and storage 46 may be located external to the device that contains control circuitry 44.

Control circuitry 44 may provide media presentation device 52 with media and pause-time content stored in storage and memory 46. Control circuitry 44 may also provide media presentation device 52 with media and pause-time content that is received from communications circuitry 48. Media presentation device 52 may be a television, a computer system with monitor and speakers, a stereo system, or any other suitable presentation device.

The user may interact with control circuitry 44 using input device 56. User input device 56 may be a remote control, a keyboard, a wireless keyboard, a display remote, a handheld computer, a mouse, a trackball, a touch pad, or any other suitable interactive interface. User input device 56 may transmit signals to communications circuitry 48 or media presentation device 52 via any suitable communications path, such as a hard wired or wireless path.

Communications paths 42 may be any suitable type of link that allows media distribution facility 36 to distribute media, pause-time content, media data, program schedule information, and any other suitable information to user equipment 40. For example, if media distribution facility 36 is a cable headend, communications paths 42 may be cable. If media distribution facility 36 is a music broadcast facility, communications paths 42 may be a wireless link. There may also be more than one communications path 42 coupling each user equipment 40 to media distribution facility 36. For example, if media distribution facility 36 is a cable headend, user equipment 40 may receive information and media from media distribution facility 36 via a cable link and may transmit information to media distribution facility 36 via a dial-up modem connection or any other suitable link. Each of communications paths 42 may be unidirectional or bidirectional.

The features of the present invention are sometimes described herein in the context of an interactive media application implemented on user television equipment. This is only illustrative. An interactive media application implemented on any suitable platform (user computer equipment, user music equipment, or any other suitable platform) may be used to provide such features. In computer arrangements, on-screen options may be selected by clicking on them using a mouse pointer or other pointing arrangement. In television arrangements, on-screen options and icons may be made larger than they appear in computer-based arrangements to accommodate the greater viewing distance from which televisions are typically operated. Options may be selected by highlighting them using remote control arrow keys and by pressing an appropriate key such as an OK or enter or select key.

In a user television environment, the interactive media system may allow the user to interact with the interactive media application using user input device 56. In one suitable approach, the user may interact with the interactive media application using specific keys or selectable options on a remote control or other suitable user input device. The user may also interact with the interactive media application by navigating a highlight and selecting options displayed on the television. The interactive media application may include or be integrated with an interactive program guide. The interactive media application may access program guide information (e.g., from program guide database 32) to provide the user with program guide information, for example, in the form of an interactive program guide.

In one suitable embodiment, multiple television and audio channels (analog, digital, or both analog and digital) may be provided to user equipment 40 via communications paths 42. If desired, pause-time content may be distributed by one or more distribution facilities that are similar to, but separate, from media distribution facility 36 using communications paths that are separate from communications paths 40 (e.g., using Internet paths).

In one suitable embodiment, the interactive media application may provide the user with access to real-time media. The real-time media may, for example, be television programming, music programming or any other suitable media. The real-time media may be presented to the user on media presentation device 52. The interactive media application may provide the user with the ability to pause the real-time media. This may be done, for example, by pressing a pause button on a remote control. In response to the pause command, the interactive media application may direct the real-time media to be stored at user equipment 40 (e.g., in storage and memory 46). In another suitable approach, the interactive media application may direct the real-time media to be stored on a remote server. The remote server may be located at distribution facility 36, at a storage facility accessible via the Internet, or at any other suitable remote location. The real-time media may be stored from substantially the same point in time as the issuance of the pause command and onwards. In another suitable approach, the real-time media may begin being stored at the same point in time as the issuance of the pause command or shortly thereafter. While the real-time media is being paused, the interactive media application may present pause-time content to the user.

Upon receiving a resume command, the interactive media application may continue to play the real-time media from the point at which it was paused. The user may resume play of the real-time media by pressing a play button, by pressing the pause button a second time, or by any other suitable method. In order to play the real-time media from the point at which it was paused, the interactive media application may retrieve the real-time media from storage. The real-time media, retrieved from storage, may be played back delayed in time from the real-time media that user equipment 40 is receiving. While the delayed real-time media is being played from storage, the interactive media application may continue to store the real-time media. The interactive media application may also provide the user with the ability to fast-forward and rewind the delayed real-time media. If the delayed real-time media is fast-forwarded until there is no delay between the delayed real-time media and the real-time media, then the interactive media application may play the real-time media as it is received with user equipment 40 instead of from storage. The interactive media application may also at that point stop storing the real-time media until the media is paused again.

In another suitable approach, the interactive media application may continuously store the real-time media that the user is playing. The interactive media application may, for example, store the previous half hour or any other suitable time period of media that has been played. In this embodiment, the real-time media that is being played is always retrieved from storage. The real-time media may be played at substantially the same time at which user equipment 40 receives the real-time media. The interactive media application in this embodiment may enable the user to rewind, pause, and fast-forward the real-time media.

Media distribution facility 36 may, in one suitable approach, provide the pause-time content to user equipment 40. Pause-time content may also be distributed to user equipment 40 from Internet 60 via communications paths other than communications path 42 or from any other facility or location remote from media distribution facility 36. Pause-time content may be distributed on-demand from server 58 or continuously on a broadcast channel (e.g., on an analog channel, digital channel, vertical blanking interval, side band, or by any other suitable method). Pause-time content may also be distributed periodically or by any other suitable method to user equipment 40.

The interactive media application may substitute pause-time content that may not be related to the media currently played by the user. For example, the interactive media application may substitute pause-time content that is continuously provided to user equipment 40, for example, on a specific broadcast channel. In this approach, all users of a specific media distribution facility may be played the same pause-time content while media is paused.

The interactive media application may also substitute pause-time content that is specific to the media that is being paused or specific to each user. The pause-time content may be an advertisement associated with the media, a summary of the events that have transpired up until the point in time at which the media was paused, trivia or facts related to the media, a link to the Web site of the media, or any other suitable media or application associated with the media. The interactive media application may monitor a user's activities to provide a customized pause-time experience for that user. For example, the interactive media application may substitute specific advertisements of upcoming media events to the user based on the type of media that the user has historically played.

The interactive media application may store some or all of the pause-time content on user equipment 40. The interactive media application may update the stored pause-time content periodically, on-demand, via polling, or by any other suitable approach. Specific pause-time content may be stored and updated according to the media data. For example, if a golf related media program is available to the user, the interactive media application may store a first advertisement featuring Callaway™ irons. If the user pauses the golf related media program, then the first advertisement may be played to the user. The interactive media application may subsequently replace the first advertisement and store a second advertisement featuring Ping™ putters. This way, if the user pauses the golf related media program for a second time, the user is presented with updated pause-time content.

In order to substitute customized pause-time content, the interactive media application may monitor the content of the media data associated with the media. Media data may be data such as identifiers, URL's, interactive media application control instructions, feature access information, metadata, program guide data or any other data related to the media and pause-time content. Media data may describe the media or pause-time content presented by user equipment 40. For example, media data may include information describing the content of a program, the clothes that an actor is wearing, the equipment used by the actors, the geographic location where the program takes place, whether media (e.g., commercials) can be skipped on playback, or any other suitable media or pause-time content information. Media data for media may contain an identifier to specific pause-time content stored by the system (e.g., in media distribution facility 36). When the user pauses the currently viewed media, the interactive media application may, for example, retrieve pause-time content from media distribution facility 36 based upon an identifier contained within the media data associated with currently paused media. In another embodiment, the interactive media application may, for example, substitute advertisements linked to metadata contained within the media data.

Media data may also contain instructions or commands for the interactive media application. The media data may include instructions such as instructions to record certain portions of the media that is playing (e.g., to create a video summary), instructions to prevent the user from fast-forwarding through the media, or any other suitable instructions. For example, when the user is viewing a sporting event such as basketball, the interactive media application may be instructed by the media data associated with the sporting event to record replays (i.e., the second showing of a play just viewed) of a "great basketball play" as the replay is presented for the second time. This way, a collection of "great plays" may be compiled and stored by the interactive media application and substituted upon pause to provide a video summary highlighting the best plays of the game.

In another suitable approach, media data associated with media such as video-on-demand, near video-on-demand, or any other suitable media may instruct the interactive media application to record certain portions of the media as it is presented to the user. In this approach, the media data may, for example, instruct the interactive media application to record certain portions (e.g., important scenes of a movie) of the media. The media data associated with the media may instruct the interactive media application to record different scenes of the media each time the user views the same media. For example, the media data may instruct the interactive media application to record different themes (e.g., a compilation of action scenes, plot scenes, romance scenes, or any other suitable category of the media) of media each time the user is presented with the same media. If desired, the interactive media application may compile a summary (e.g., a shortened version of a theatrical movie trailer) specific to the media viewed by the user.

Media data may be received by the interactive media application in a variety of different ways. In one suitable approach, media data may be received in conjunction with pause-time content or media, received separately from the viewed media, or by any other suitable reception means. When the media data is received in conjunction with the pause-time content or media, it may, for example, be incorporated, hidden, or ingrained (e.g., in the vertical blanking interval or on a side band) with the media or real-time signal received by user equipment 40. In such an approach, the interactive media application may process the media signal to obtain the media data (e.g., identifier, instructions, URL, etc.).

The interactive media application may also obtain the media data associated with the played media by monitoring, for example, the channel that the user is viewing. The interactive media application using this information (e.g., channel information) and the current time, may access a database that contains the media data for the channels that are available to the user in order to obtain the desired media data. For example, when the user is viewing channel five, the interactive media application may check the database and determine that the media data associated with channel five indicates that channel five is playing a comedy. In this case, the interactive media application may substitute comedy related pause-time content if the user pauses the media.

When the interactive media application stores media (e.g., during the pausing of media, when the media has been scheduled to be recorded, etc.), the application may also store the media's associated media data. The stored media data may, for example, enable the interactive media application to provide customized pause-time content, prevent access to application features at certain times (e.g., preventing fast-forwarding of certain media), or perform any other suitable actions when the user is playing delayed real-time media, delayed near video-on-demand media, or recorded media. For example, when the user pauses previously recorded media, the interactive media application may access its associated stored media data so that the appropriate pause-time content may be substituted for the paused recorded media.

The interactive media application may provide the user with the ability to personalize pause-time content presented to the user. For example, the user may select the type of pause-time content that is presented by the interactive media application when the media is paused. The interactive media application may also provide the user with the ability to select the type of pause-time content that is presented for specific types of media. The different types of pause-time content may include trivia, summaries, interviews, broadcast video, music, promotions, advertisements, or any other suitable pause-time content. For example, if the media is "home improvement" or "build it yourself" oriented programming, the user may select promotions and advertisements as the presented pause-time content. This way, the user may be, for example, presented with different promotions on power tools, building supplies, hand tools, or any other suitable home building related promotions during pause. In another suitable approach, the user may be able to prevent certain types of pause-time content to be presented when the media is paused.

The interactive media application may provide the user with the ability to change the pause-time content being provided to the user. For example, if the user is presented with a pause-time content promotion that has been previously presented, the user may advance to the next promotion by pressing, for example, a button on a remote control. The user may also be provided with the ability to change the type of pause-time content currently being presented to a different type of pause-time content. If the user is viewing pause-time content that is an interview, the user may change the pause-time content to, for example, an advertisement or any other suitable pause-time content.

The interactive media application may also display information on user equipment 40, for example, in the form of an overlay, an interactive overlay, a program guide screen, or in any other suitable display format. The interactive media application may display information to inform the user as to the status of the interactive media application or in response to user inputs (e.g., play, pause, fast-forward, rewind, stop, etc.). These display screens may be displayed for a certain period of time and then time out or may be removed in response to a user input (e.g., by pressing a button on user input device 56). The interactive media application may also display additional information such as program guide information (e.g, title information), the current time and date, information that indicates how much time delay exists between the displayed media and the real-time media, or any other suitable information.

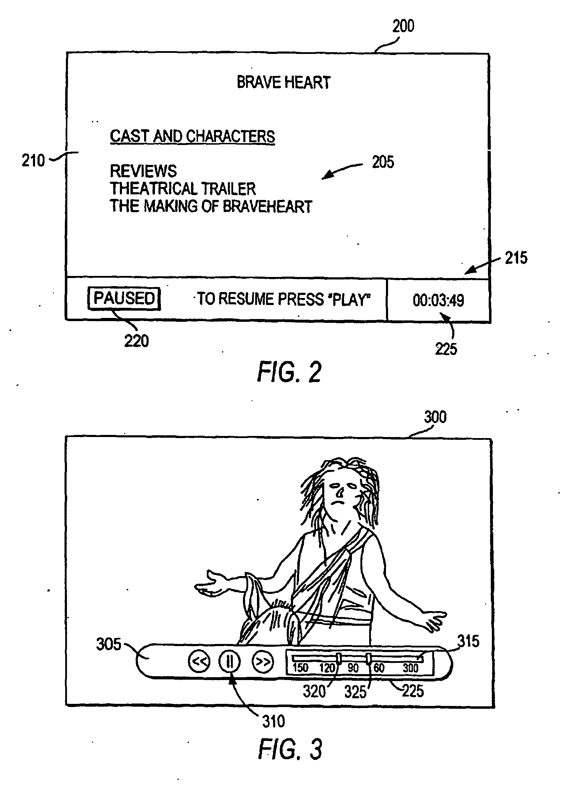

An illustrative display screen that may be displayed by the interactive media application is shown in FIG. 2. Screen 200 of FIG. 2 may be displayed when the user pauses real-time media. As illustrated, the user has paused the movie "Braveheart." The interactive media application has substituted the Web site for the movie "Braveheart" in place of the paused movie. Screen 200 may include options 205 that the user may select with indicator 210. Options 205 on the Web site may include "Cast and Characters," "Reviews," "Theatrical Trailer," "The Making of Braveheart," or any other suitable options. The user may navigate indicator 210 to a desired option by using, for example, up and down arrow keys. A user may select a desired option by pressing an "Ok" or "Enter" key or by any other suitable method. For example, if the user selects "Reviews," the interactive media application may display one or more reviews of "Braveheart."

Screen 200 may also include overlay 215. Overlay 215 may include status indicator 220 that informs the user the current status of media. Overlay 215 may also include time indicator 225. Time indicator 225 may inform the user how much time has elapsed between the point in time at which the media has been paused and the point in time in the media that is currently being received by user equipment 40. As illustrated, "Braveheart" has been paused for three minutes and forty-nine seconds.

If the user resumes play of the paused real-time media, the interactive media application may display illustrative display screen 300 as shown in FIG. 3. The interactive media application may resume playing the movie "Braveheart" from substantially the same point in time at which the movie was paused. Screen 300 may also include interactive overlay 305. Interactive overlay 305 may illustrate the different options available to the user. As illustrated, the user may be able to rewind, pause, and fast-forward the delayed media. Pause option 310 is highlighted to indicate that if the user presses, for example, the "Select" key, then the interactive media application may pause the media. The user may also be able to navigate the highlight to either the rewind or fast-forward options. In another suitable approach, the user may press designated buttons on user input device 52 to pause, fast-forward, rewind, or to perform any other suitable function. If the user presses a designated button, a highlight corresponding to the selected button may be presented on screen 300 to indicate which button was selected. Interactive overlay 305 may also include time indicator 225. As illustrated, time indicator 225 is displayed in a graphical format. Bar 315 denotes the length of the entire movie. Present position indicator 320 represents the point of the movie that is currently being displayed. Real-time indicator 325 represents the point in the real-time media that is currently being received by user equipment 40. If, for example, the user fast-forwards the media, present position indicator 320 may move closer to real-time indicator 325. If the present position indicator 320 and the real-time indicator 325 refer to the same point within the media, then the user may not be allowed to fast-forward beyond that point.

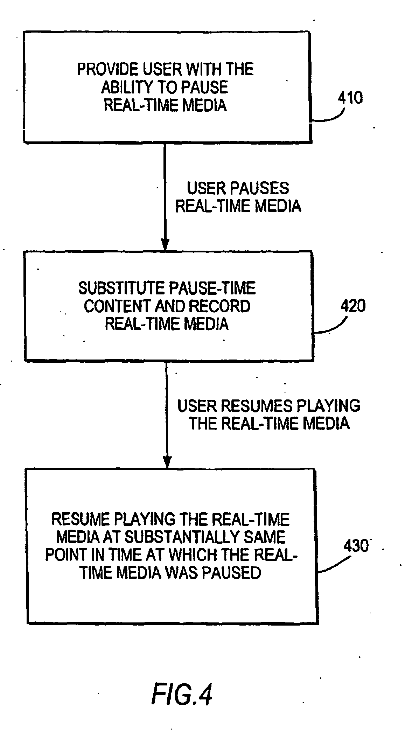

FIG. 4 is a flow chart of illustrative steps that may be involved for allowing the user to pause real-time media and playing pause-time content. The real-time media may, for example, be television programming such as broadcast programming, cable programming, and pay-per-view programming, music programming, or any other suitable type of real-time media. At step 410, the interactive media application may provide the user with the ability to pause real-time media. The real-time media may be music programming such as "The Greatest Hits of Pink Floyd." For example, the user may pause the music programming by pressing the pause button on user input device 56 or by any other suitable method.

At step 420, the interactive media application may substitute pause-time content and record the real-time media. The pause-time content may be any suitable pause-time content such as pause-time content specific to the media paused or specific to the user. The pause-time content may be any media such as graphics, text, animations, music, promotions, advertisements, summaries, trivia, Web Sites or any other suitable media or combination of media. The interactive media application may monitor the content of the media data associated with the media in order to provide the pause-time content specific to the paused media. The interactive media system may substitute pause-time content such as an audio interview with Roger Waters in place of "The Greatest Hits of Pink Floyd." This pause-time content or any other pause-time content may be substituted until the user resumes play of the real-time media.

At step 430, the interactive media application may resume playing the real-time media at substantially the same point in time at which the real-time media was paused. The interactive media application may, for example, resume play of the paused real-time media a few seconds before the pause, at the exact moment in time the media was paused, or a few seconds after the pause. The user may, for example, press the pause button again on user input device 56 or any other suitable device to resume play of the real-time media.

It will be understood that the steps shown in FIG. 4 are merely exemplary and that additional steps may be added and some of the steps may be omitted or modified. For example, the above steps may also be used for allowing a user to pause near video-on-demand media.

In another suitable approach for pausing NVOD media, the interactive media application may not record the NVOD media when the user pauses the media. Typically, NVOD media may be provided by a server (e.g., server 58) that distributes the same media program at regular intervals (e.g., every five minutes). In such an approach, the interactive media application may play a later showing of the NVOD media when the user resumes play of the media.

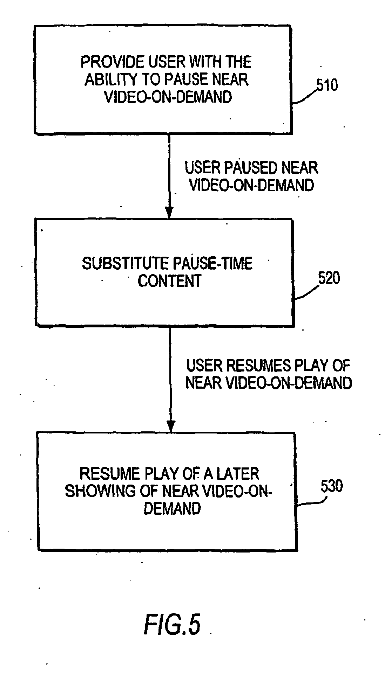

FIG. 5 is a flow chart of illustrative steps that may be involved for allowing the user to pause NVOD media and substituting pause-time content. At step 510, the user may be provided with the ability to pause the NVOD media that is currently playing.

At step 520, the interactive media application may substitute pause-time content in place of the NVOD media. The pause-time content may be any suitable pause-time content such as pause-time content specific to the media paused or specific to the user. In addition, the pause-time content may be any media such as graphics, text, animations, music, promotions, advertisements, summaries, trivia, Web Sites or any other suitable media or combination of media. The interactive media application may monitor the content of the media data associated with the NVOD media in order to provide pause-time content specific to the paused media. The pause-time content may be played until the user resumes play of the NVOD media.

At step 530, the interactive media application may resume playing the NVOD media by playing a later showing of the NVOD media. For example, if the NVOD media is distributed every five minutes and the user pauses the media for thirty minutes, then the interactive media application may resume playing the NVOD media by playing the sixth following showing of the NVOD media.

It will be understood that the steps shown in FIG. 5 are merely exemplary and that additional steps may be added and some of the steps may be omitted or modified. For example, at step 520, the interactive media application may also inform the user how much time is remaining until the next showing of the NVOD media will line up with the currently paused NVOD media.

The interactive media application may also provide the user with the ability to access video-on-demand media. The interactive media application may, for example, access VOD media in a client-server arrangement. The VOD media may be stored on a VOD server (e.g., at media distribution facility 36) that is located remote from user equipment 40. The interactive media application may use program guide information to inform the user of available VOD media. This information may be accessed by the user through an interactive program guide. When the user pauses VOD media, the interactive media application may stop playing the media from the VOD server and substitute pause-time content. When the user resumes play of the VOD media, the interactive media application may resume playing the media from the VOD server at the point in time at which it was paused.

The interactive media application may operate in a similar manner with recorded media. However, instead of accessing the media from a server located remote from user equipment 40, the interactive media application may access the recorded media locally at user equipment 40. The interactive media application may provide the user with the ability to record media by, for example, selecting programs for recording from an interactive program guide.

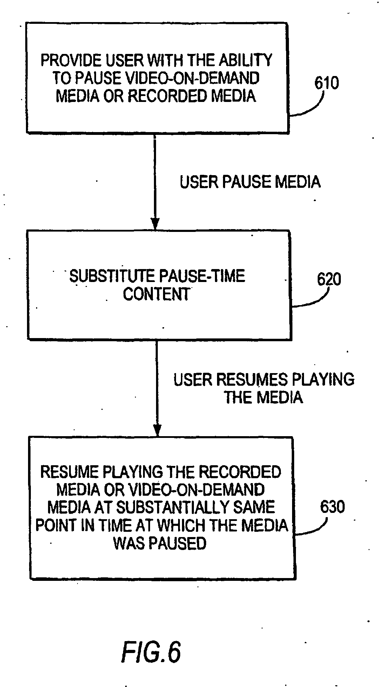

FIG. 6 is a flow chart of illustrative steps that may be involved for allowing the user to pause VOD or recorded media and substituting pause-time content. At step 610, the user may be provided with the ability to pause the VOD or recorded media that is currently playing.

At step 620, the interactive media application may substitute pause-time content in place of the paused VOD or recorded media. The interactive media application may substitute, for example, unrelated pause-time content that is continuously provided to user equipment 40 on a specific broadcast channel. The interactive media application may also monitor the content of the media data associated with the VOD or recorded media in order to substitute pause-time content that is associated with the paused media. The interactive media application may also monitor the user's actions and substitute pause-time content specific to the user. The pause-time content may be played until the user resumes play of the VOD or recorded media.

At step 630, the interactive media application may resume playing the VOD media or recorded media at substantially the same point in time at which the media was paused.

It will be understood that the steps shown in FIG. 6 are merely exemplary and that additional steps may be added and some of the steps may be omitted or modified.

In another embodiment of the present invention, the user may be prevented from accessing certain features of the interactive media application. The user may, for example, be prohibited from rewinding media, fast-forwarding media, pausing media, recording media or performing any other suitable feature of the interactive media application.

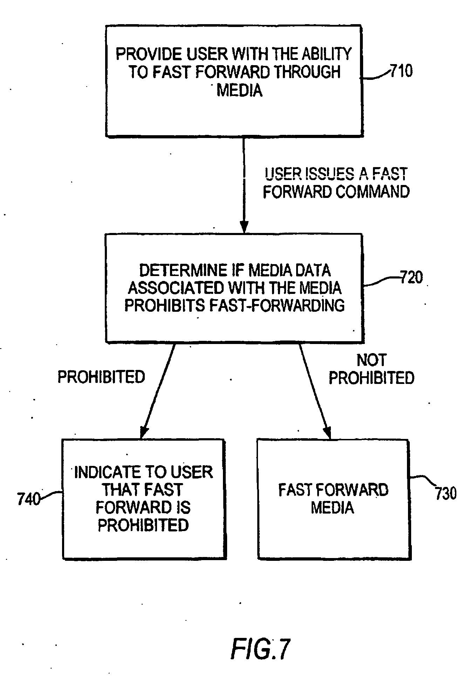

FIG. 7 is a flowchart of illustrative steps that may be involved for preventing the user from accessing a feature. At step 710, the interactive media application may provide the user with the ability to access a feature. For example, the interactive media application may provide the user with the ability to access a fast-forward feature while viewing delayed real-time media or recorded media (e.g., "The Simpsons," which may recorded on a daily basis).

At step 720, the interactive media application may determine if the media data associated with the currently viewed media prevents the user from accessing the feature. For example, media data associated with the media may prevent users from fast-forwarding through certain commercials in the media. This may provide media providers with the ability to force viewers to watch certain portions of the media (e.g., commercials) during playback.

When the media data does not prevent the user from accessing the feature, the interactive media application may allow the user to access the feature as indicated in step 730.

Alternatively, when the media data prevents the user from accessing the feature, the interactive media application may prevent the user from accessing the feature as indicated at step 740. The interactive media application may also inform the user that the feature is restricted.

It will be understood that the steps shown in FIG. 7 are merely exemplary and that additional steps may be added and some of the steps may be omitted or modified.

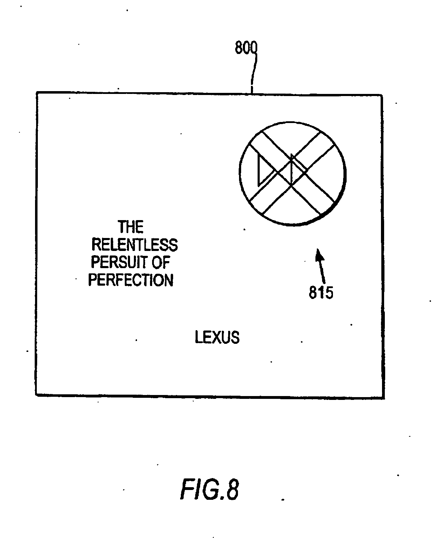

An illustrative display screen that may be displayed by the interactive media application when the user attempts to access a feature is shown in FIG. 8. Screen 800 of FIG. 8 may be displayed when the user attempts to fast-forward the media. As illustrated, the user is attempting to fast-forward through a "Lexus" commercial. Overlay 815 may be displayed to inform the user that the media may not be fast-forwarded. Overlay 815 is merely illustrative and any other suitable overlay or notification may be presented to the user to indicate that the feature is restricted.

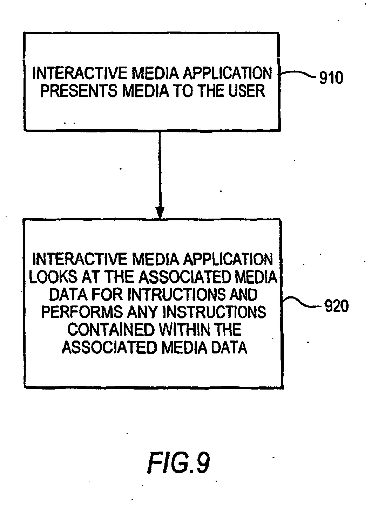

FIG. 9 is a flowchart of illustrative steps that may be involved in instructing the interactive media application to perform certain tasks based on the content of the media data. At step 910, the interactive media application may present media (e.g., real-time, VOD, NVOD) to the user. At step 920, the interactive media application may look at the media data associated with the media currently being presented for instructions and perform any instructions contained with the associated media data. For example, if the user is watching a television program, the media data may, for example, instruct the interactive media application to record the opening scene, an important shift in the plot, a replay, or any other suitable portion of the program viewed by the user.

Thus, systems and methods for presenting pause-time content are provided. One skilled in the art will realize that the present invention can be practiced by other than the described embodiments, which are presented for purposes of illustration and not of limitation, and that the present invention is limited only by the claims which follow.

## Claims

1. A method for using an interactive television application to substitute content in place of television programming that is being paused, comprising:
displaying television programming, the television programming having an identifier to specific content;
pausing (410) the play of the television programming in response to a user command to pause the play of the television programming;
in response to the television programming being paused, retrieving the specific content from a media distribution facility (36) based on the identifier,
playing the retrieved specific content by substituting (420) the content in place of the television programming while the television programming is being paused; and
resuming play (430) of the television programming in response to a further user command, at substantially the same point at which the play of the television programming was paused

2. The method of claim 1, further comprising:
receiving the television programming; and
storing the received television programming such that a user can view any portion of the received television programming within a predetermined time period, wherein the displayed television programming is derived from the stored television programming.

3. The method of claim 1, further comprising recording the television programming.

4. The method of claim 1, wherein the television programming is broadcast television programming, video-on-demand television programming or near video-on-demand media, or wherein the television programming is previously recorded television programming.

5. The method of claim 1, wherein the television programming has associated media data and wherein the interactive television application uses the content of the media data to substitute content that is associated with the media.

6. The method of claim 1, wherein the content is selected from the group consisting of an advertisement, a promotion, a trivia game, a musical selection, a graphic, an animation, a program summary, a textual description, broadcast video and a web site.

7. The method of claim 1, wherein the content comprises advertisements.

8. The method of claim 1, wherein the content is interactive.

9. The method of claim 1, wherein the interactive media application is implemented on user equipment, the method further comprising storing the content locally at the user equipment or storing the content remote from the user equipment, the method preferably further comprising allowing the interactive television application to access the pause-time content on demand.

10. The method of claim 1, wherein the interactive television application is implemented on a personal video recorder, the method preferably further comprising recording the television programming with the personal video recorder.

11. The method of claim 1, further comprising providing the user with the ability to personalise the content or providing the user the ability to select particular types of content to be presented by the interactive television application, or providing the user the ability to prevent particular types of content to be presented by the interactive media application, providing the user the ability to change the content that is playing, the type of content preferably being selected from a group consisting of an advertisement, a promotion, a trivia game, a musical selection, a graphic, an animation, a program summary, a textual description, and a web site.

12. An interactive television system that substitutes content in place of television programming that is being paused, comprising user equipment configured to:
display television programming, the television programming having an identifier to specific content;
pause the play (410) of the television programming in response to a user command to pause the play of the television programming;
in response to the television programming being paused, retrieve the specific content from a media distribution facility (36) based on the identifier;
play the retrieved specific content by substituting (420) the content in place of the television programming while the television programming is being paused; and
resuming play (430) of the television programming in response to a further user command, at substantially the same point at which the play of the television programming was paused

13. The system of claim 12, wherein the user equipment is further configured to:
receive the television programming; and
store the received television programming such that a user can view any portion of the received television programming within a predetermined time period, wherein the displayed television programming is derived from the stored television programming.

14. The system of claim 12, wherein the user equipment is further configured to record the television programming.

15. The system of claim 12, wherein the television programming is broadcast television programming, video-on-demand television programming or near video-on-demand media, or wherein the television programming is previously recorded television programming.

16. The system of claim 12, wherein the television programming has associated media data and wherein the user equipment uses the content of the media data to substitute content that is associated with the media.

17. The system of claim 12, wherein the content is selected from the group consisting of an advertisement, a promotion, a trivia game, a musical selection, a graphic, an animation, a program summary, a textual description, broadcast video and a web site.

18. The system of claim 12, wherein the content comprises advertisements.

19. The system of claim 12, wherein the content is interactive.

20. The system of claim 12, further comprising a remote facility to store the television programming and/or content, wherein the user equipment is further configured to display the television programming or the content by accessing the television programming or content on-demand form the remote facility, the remote facility preferably being a media distribution facility.

21. The system of claim 12, wherein the user equipment is user television equipment or a personal video recorder.

22. The system of claim 12, wherein the user equipment is further configured to provide the user with the ability to personalise the content or provide the user the ability to select particular types of content to be presented by the interactive television application, or provide the user the ability to prevent particular types of content to be presented by the interactive media application, providing the user the ability to change the content that is playing, the type of content preferably being selected from a group consisting of an advertisement, a promotion, a trivia game, a musical selection, a graphic, an animation, a program summary, a textual description, and a web site.

23. The method of claim 1, further comprising:
monitoring media data associated with the television programming;
determining whether the content of the media data indicates that the user should be prevented from accessing a feature of the interactive media application; and
preventing the user from accessing the feature of the interactive media application when the media data indicates that the user should be prevented from accessing the feature of the interactive media application.

24. The method of claim 23, wherein:
the media data indicates that the user should be prevented from fast-forwarding through the television programming that is playing,
the television programming is an advertisement, and
the media data indicates that the user should be prevented from fast-forwarding through the advertisement.

## Patentansprüche

1. Verfahren zum Nutzen einer interaktiven Fernsehanwendung zum Ersetzen von Inhalt an Stelle eines Fernsehprogramms, das pausiert wird, aufweisend:
Anzeigen eines Fernsehprogramms, wobei das Fernsehprogramm einen Identifikator für spezifischen Inhalt hat;
Pausieren (410) der Wiedergabe des Fernsehprogramms als Reaktion auf einen Benutzerbefehl, die Wiedergabe des Fernsehprogramms zu pausieren;
als Reaktion auf das pausierte Fernsehprogramm, Abrufen des spezifischen Inhalts aus einer Mediendistributionseinrichtung (36) auf der Grundlage des Identifikators;
Wiedergeben des abgerufenen spezifischen Inhalts durch Ersetzen (420) des Inhalts an Stelle des Fernsehprogramms, während das Fernsehprogramm pausiert wird; und
Wiederaufnehmen der Wiedergabe (430) des Fernsehprogramms als Reaktion auf einen weiteren Benutzerbefehl, am im Wesentlichen gleichen Punkt, an dem die Wiedergabe des Fernsehprogramms pausiert wurde.

2. Verfahren nach Anspruch 1, des Weiteren aufweisend:
Empfangen des Fernsehprogramms; und
Speichern des empfangenen Fernsehprogramms, sodass ein Benutzer einen beliebigen Teil des empfangenen Fernsehprogramms in einem vorbestimmten Zeitraum ansehen kann, wobei das angezeigte Fernsehprogramm aus dem gespeicherten Fernsehprogramm stammt.

3. Verfahren nach Anspruch 1, des Weiteren aufweisend das Aufzeichnen des Fernsehprogramms.

4. Verfahren nach Anspruch 1, wobei das Fernsehprogramm ein ausgestrahltes Fernsehprogramm, ein Video-on-Demand-Fernsehprogramm oder Near-Video-on-Demand-Medien ist/sind oder das Fernsehprogramm ein zuvor aufgezeichnetes Fernsehprogramm ist.

5. Verfahren nach Anspruch 1, wobei das Fernsehprogramm zugehörige Mediendaten hat und wobei die interaktive Fernsehanwendung den Inhalt der Mediendaten nutzt, um zu den Medien zugehörigen Inhalt zu ersetzen.

6. Verfahren nach Anspruch 1, wobei der Inhalt aus der Gruppe ausgewählt ist, die aus einer Werbung, einer Promotion, einem Ratespiel, einer Musikauswahl, einer Grafik, einer Animation, einer Programmzusammenfassung, einer Textbeschreibung, ausgestrahlten Videos und einer Website besteht.

7. Verfahren nach Anspruch 1, wobei der Inhalt Werbung aufweist.

8. Verfahren nach Anspruch 1, wobei der Inhalt interaktiv ist.

9. Verfahren nach Anspruch 1, wobei die interaktive Medienanwendung auf einem Benutzergerät implementiert wird, wobei das Verfahren des Weiteren das Speichern des Inhalts lokal auf dem Benutzergerät oder das Speichern des Inhalts entfernt vom Benutzergerät aufweist, wobei es das Verfahren vorzugsweise gestattet, dass die interaktive Fernsehanwendung bei Bedarf auf den On-Demand-Inhalt der Pausenzeit zugreift.

10. Verfahren nach Anspruch 1, wobei die interaktive Fernsehanwendung auf einem persönlichen Videorekorder implementiert ist, wobei das Verfahren vorzugsweise des Weiteren das Aufzeichnen des Fernsehprogramms mit dem persönlichen Videorekorder aufweist.

11. Verfahren nach Anspruch 1, des Weiteren aufweisend das Bereitstellen der Fähigkeit für den Benutzer, den Inhalt individuell anzupassen, oder das Bereitstellen der Fähigkeit für den Benutzer, bestimmte Arten von Inhalt auszuwählen, die von der interaktiven Fernsehanwendung präsentiert werden sollen, oder das Bereitstellen der Fähigkeit für den Benutzer, zu verhindern, dass bestimmte Arten von Inhalt von der interaktiven Medienanwendung präsentiert werden, wobei für den Benutzer die Fähigkeit bereitgestellt wird, den wiedergegebenen Inhalt zu ändern, wobei die Art des Inhalts vorzugsweise aus einer Gruppe ausgewählt ist, die aus einer Werbung, einer Promotion, einem Ratespiel, einer Musikauswahl, einer Grafik, einer Animation, einer Programmzusammenfassung, einer Textbeschreibung und einer Website besteht.

12. Interaktives Fernsehsystem zum Ersetzen von Inhalt an Stelle eines Fernsehprogramms, das pausiert wird, aufweisend ein Benutzergerät, das für Folgendes konfiguriert ist:
Anzeigen eines Fernsehprogramms, wobei das Fernsehprogramm einen Identifikator für spezifischen Inhalt hat;
Pausieren (410) der Wiedergabe des Fernsehprogramms als Reaktion auf einen Benutzerbefehl, die Wiedergabe des Fernsehprogramms zu pausieren;
als Reaktion auf das pausierte Fernsehprogramm, Abrufen des spezifischen Inhalts aus einer Mediendistributionseinrichtung (36) auf der Grundlage des Identifikators;
Wiedergeben des abgerufenen spezifischen Inhalts durch Ersetzen (420) des Inhalts an Stelle des Fernsehprogramms, während das Fernsehprogramm pausiert wird; und
Wiederaufnehmen der Wiedergabe (430) des Fernsehprogramms als Reaktion auf einen weiteren Benutzerbefehl, am im Wesentlichen gleichen Punkt, an dem die Wiedergabe des Fernsehprogramms pausiert wurde.

13. System nach Anspruch 12, wobei das Benutzergerät des Weiteren für Folgendes konfiguriert ist:
Empfangen des Fernsehprogramms; und
Speichern des empfangenen Fernsehprogramms, sodass ein Benutzer einen beliebigen Teil des empfangenen Fernsehprogramms in einem vorbestimmten Zeitraum ansehen kann, wobei das angezeigte Fernsehprogramm aus dem gespeicherten Fernsehprogramm stammt.

14. System nach Anspruch 12, wobei das Benutzergerät des Weiteren für das Aufzeichnen des Fernsehprogramms konfiguriert ist.

15. System nach Anspruch 12, wobei das Fernsehprogramm ein ausgestrahltes Fernsehprogramm, ein Video-on-Demand-Fernsehprogramm oder Near-Video-on-Demand-Medien ist/sind oder das Fernsehprogramm ein zuvor aufgezeichnetes Fernsehprogramm ist.

16. System nach Anspruch 12, wobei das Fernsehprogramm zugehörige Mediendaten hat und wobei das Benutzergerät den Inhalt der Mediendaten nutzt, um zu den Medien zugehörigen Inhalt zu ersetzen.

17. System nach Anspruch 12, wobei der Inhalt aus der Gruppe ausgewählt ist, die aus einer Werbung, einer Promotion, einem Ratespiel, einer Musikauswahl, einer Grafik, einer Animation, einer Programmzusammenfassung, einer Textbeschreibung, ausgestrahlten Videos und einer Website besteht.

18. System nach Anspruch 12, wobei der Inhalt Werbung aufweist.

19. System nach Anspruch 12, wobei der Inhalt interaktiv ist.

20. System nach Anspruch 12, des Weiteren aufweisend eine entfernte Einrichtung zum Speichern des Fernsehprogramms und/oder Inhalts, wobei das Benutzergerät des Weiteren konfiguriert ist, das Fernsehprogramm oder den Inhalt anzuzeigen, indem es von der entfernten Einrichtung auf das On-Demand-Fernsehprogramm oder den On-Demand-Inhalt zugreift, wobei die entfernte Einrichtung vorzugsweise eine Mediendistributionseinrichtung ist.

21. System nach Anspruch 12, wobei das Benutzergerät ein Benutzerfernsehgerät oder ein persönlicher Videorekorder ist.

22. System nach Anspruch 12, wobei das Benutzergerät des Weiteren konfiguriert ist für das Bereitstellen der Fähigkeit für den Benutzer, den Inhalt individuell anzupassen, oder das Bereitstellen der Fähigkeit für den Benutzer, bestimmte Arten von Inhalt auszuwählen, die von der interaktiven Fernsehanwendung präsentiert werden sollen, oder das Bereitstellen der Fähigkeit für den Benutzer, zu verhindern, dass bestimmte Arten von Inhalt von der interaktiven Medienanwendung präsentiert werden, wobei für den Benutzer die Fähigkeit bereitgestellt wird, den wiedergegebenen Inhalt zu ändern, wobei die Art des Inhalts vorzugsweise aus einer Gruppe ausgewählt ist, die aus einer Werbung, einer Promotion, einem Ratespiel, einer Musikauswahl, einer Grafik, einer Animation, einer Programmzusammenfassung, einer Textbeschreibung und einer Website besteht.

23. Verfahren nach Anspruch 1, des Weiteren aufweisend:
Überwachen von zum Fernsehprogramm zugehörigen Mediendaten;
Bestimmen, ob der Inhalt der Mediendaten anzeigt, dass der Benutzer daran gehindert werden soll, auf eine Funktion der interaktiven Medienanwendung zuzugreifen; und
Hindern des Benutzers am Zugreifen auf die Funktion der interaktiven Medienanwendung, wenn die Mediendaten anzeigen, dass der Benutzer daran gehindert werden soll, auf die Funktion der interaktiven Medienanwendung zuzugreifen.

24. Verfahren nach Anspruch 23, wobei:
die Mediendaten anzeigen, dass der Benutzer am Vorspulen durch das wiedergegebene Fernsehprogramm gehindert werden soll,
das Fernsehprogramm eine Werbung ist, und
die Mediendaten anzeigen, dass der Benutzer am Vorspulen durch die Werbung gehindert werden soll.

## Revendications

1. Procédé pour utiliser une application de télévision interactive pour remplacer, par un contenu, une émission de télévision qui est mise en pause, comprenant :
afficher une émission de télévision, l'émission de télévision possédant un identifiant pour un contenu spécifique ;
mettre en pause (410) la lecture de l'émission de télévision en réponse à une commande utilisateur pour mettre en pause la lecture de l'émission de télévision ;
en réponse à la mise en pause de l'émission de télévision, récupérer le contenu spécifique à partir d'une installation de distribution multimédia (36) en fonction de l'identifiant ;
lire le contenu récupéré en remplaçant (420), par le contenu, l'émission de télévision alors que l'émission de télévision est mise en pause ; et
recommencer (430) la lecture de l'émission de télévision, en réponse à une commande utilisateur supplémentaire, sensiblement au même instant auquel la lecture de l'émission de télévision a été mise en pause.

2. Procédé selon la revendication 1, comprenant en outre :
recevoir l'émission de télévision ; et
stocker l'émission de télévision reçue de sorte qu'un utilisateur puisse voir une quelconque partie de l'émission de télévision reçue au sein d'une période prédéterminée, dans lequel l'émission de télévision affichée est dérivée de l'émission de télévision stockée.

3. Procédé selon la revendication 1, comprenant en outre enregistrer l'émission de télévision.

4. Procédé selon la revendication 1, dans lequel l'émission de télévision est une émission de télévision diffusée, une émission de télévision vidéo à la demande ou un multimédia vidéo quasi à la demande, ou dans lequel l'émission de télévision est une émission de télévision enregistrée auparavant.

5. Procédé selon la revendication 1, dans lequel l'émission de télévision comporte des données multimédia associées et dans lequel l'application de télévision interactive utilise le contenu des données multimédia pour remplacer un contenu qui est associé au multimédia.

6. Procédé selon la revendication 1, dans lequel le contenu est sélectionné parmi le groupe constitué d'un message publicitaire, d'une promotion, d'un jeu-questionnaire général, d'une sélection musicale, d'un graphique, d'une animation, d'un résumé d'émission, d'une description textuelle, d'une vidéo diffusée et d'un site Web.

7. Procédé selon la revendication 1, dans lequel le contenu comprend des messages publicitaires.

8. Procédé selon la revendication 1, dans lequel le contenu est interactif.

9. Procédé selon la revendication 1, dans lequel l'application multimédia interactive est implémentée sur un équipement utilisateur, le procédé comprenant en outre stocker le contenu localement dans l'équipement utilisateur ou stocker le contenu à distance de l'équipement utilisateur, le procédé comprenant de préférence en outre permettre à l'application de télévision interactive d'accéder au contenu en temps de pause à la demande.

10. Procédé selon la revendication 1, dans lequel l'application de télévision interactive est implémentée sur un enregistreur vidéo personnel, le procédé comprenant de préférence en outre enregistrer l'émission de télévision avec l'enregistreur vidéo personnel.

11. Procédé selon la revendication 1, comprenant en outre fournir à l'utilisateur la capacité de personnaliser le contenu ou fournir à l'utilisateur la capacité de sélectionner des types particuliers de contenu destinés à être présentés par l'application de télévision interactive, ou fournir à l'utilisateur la capacité d'empêcher des types particuliers de contenu d'être présentés par l'application multimédia interactive, fournir à l'utilisateur la capacité de changer le contenu dont la lecture est en cours, le type de contenu étant de préférence sélectionné parmi un groupe constitué d'un message publicitaire, d'une promotion, d'un jeu-questionnaire général, d'une sélection musicale, d'un graphique, d'une animation, d'un résumé d'émission, d'une description textuelle, et d'un site Web.

12. Système de télévision interactif qui remplace, par un contenu, une émission de télévision qui est mise en pause, comprenant un équipement utilisateur configuré pour :
afficher une émission de télévision, l'émission de télévision possédant un identifiant pour un contenu spécifique ;
mettre en pause la lecture (410) de l'émission de télévision en réponse à une commande utilisateur pour mettre en pause la lecture de l'émission de télévision ;
en réponse à la mise en pause de l'émission de télévision, récupérer le contenu spécifique à partir d'une installation de distribution multimédia (36) en fonction de l'identifiant ;
lire le contenu spécifique récupéré en remplaçant (420), par le contenu, l'émission de télévision alors que l'émission de télévision est mise en pause ; et
recommencer la lecture (430) de l'émission de télévision, en réponse à une commande utilisateur supplémentaire, sensiblement au même instant auquel la lecture de l'émission de télévision a été mise en pause.

13. Système selon la revendication 12, dans lequel l'équipement utilisateur est en outre configuré pour :
recevoir l'émission de télévision ; et
stocker l'émission de télévision reçue de sorte qu'un utilisateur puisse voir une quelconque partie de l'émission de télévision reçue au sein d'une période prédéterminée, dans lequel l'émission de télévision affichée est dérivée de l'émission de télévision stockée.

14. Système selon la revendication 12, dans lequel l'équipement utilisateur est en outre configuré pour enregistrer l'émission de télévision.

15. Système selon la revendication 12, dans lequel l'émission de télévision est une émission de télévision diffusée, une émission de télévision vidéo à la demande ou un multimédia vidéo quasi à la demande, ou dans lequel l'émission de télévision est une émission de télévision enregistrée auparavant.

16. Système selon la revendication 12, dans lequel l'émission de télévision comporte des données multimédia associées et dans lequel l'équipement utilisateur utilise le contenu des données multimédia pour remplacer un contenu qui est associé au multimédia.

17. Système selon la revendication 12, dans lequel le contenu est sélectionné parmi le groupe constitué d'un message publicitaire, d'une promotion, d'un jeu-questionnaire général, d'une sélection musicale, d'un graphique, d'une animation, d'un résumé d'émission, d'une description textuelle, d'une vidéo diffusée et d'un site Web.

18. Système selon la revendication 12, dans lequel le contenu comprend des messages publicitaires.

19. Système selon la revendication 12, dans lequel le contenu est interactif.

20. Système selon la revendication 12, comprenant en outre une installation à distance pour stocker l'émission de télévision et/ou le contenu, dans lequel l'équipement utilisateur est en outre configuré pour afficher l'émission de télévision ou le contenu en accédant à l'émission de télévision ou au contenu à la demande à partir de l'installation à distance, l'installation à distance étant de préférence une installation de distribution multimédia.

21. Système selon la revendication 12, dans lequel l'équipement utilisateur est un équipement utilisateur de télévision ou un enregistreur vidéo personnel.

22. Système selon la revendication 12, dans lequel l'équipement utilisateur est en outre configuré pour fournir à l'utilisateur la capacité de personnaliser le contenu ou fournir à l'utilisateur la capacité de sélectionner des types particuliers de contenu destinés à être présentés par l'application de télévision interactive, ou fournir à l'utilisateur la capacité d'empêcher des types particuliers de contenu d'être présentés par l'application multimédia interactive, fournir à l'utilisateur la capacité de changer le contenu dont la lecture est en cours, le type de contenu étant de préférence sélectionné parmi un groupe constitué d'un message publicitaire, d'une promotion, d'un jeu-questionnaire général, d'une sélection musicale, d'un graphique, d'une animation, d'un résumé d'émission, d'une description textuelle, et d'un site Web.

23. Procédé selon la revendication 1, comprenant en outre :
surveiller des données multimédia associées à l'émission de télévision ;
déterminer si le contenu des données multimédia indique que l'utilisateur doit être empêché d'accéder à un élément de l'application multimédia interactive ; et
empêcher l'utilisateur d'accéder à l'élément de l'application multimédia interactive lorsque les données multimédia indiquent que l'utilisateur doit être empêché d'accéder à l'élément de l'application multimédia interactive.

24. Procédé selon la revendication 23, dans lequel :
les données multimédia indiquent que l'utilisateur doit être empêché de réaliser une avance rapide de l'émission de télévision dont la lecture est en cours, l'émission de télévision est un message publicitaire, et les données multimédia indiquent que l'utilisateur doit être empêché de réaliser une avance rapide du message publicitaire.
